# EUROPEAN PATENT APPLICATION

(11) **EP 1 376 508 A2**
(43) Date of publication of application: **02.01.2004**
(21) Application number: 03291591.0
(22) Date of filing: 27.06.2003
(51) Int. Cl.: G08C 17/02

(54) **Method, apparatus and system activated by a phone call to control other systems**

(30) Priority: 27.06.2002 BR 0202423
(71) Applicant: Fluri, Georges Erhard, Ilha do Governador, Rio de Janeiro (BR)
(72) Inventor: Fluri, Georges Erhard, Ilha do Governador, Rio de Janeiro (BR)
(74) Representative: Thévenet, Jean-Bruno

(57) **Abstract**

The present invention relates generally to activate and deactivate other known systems, such as car brake system, electric and/or electronic system, fire alarm system, systems of safety and others, by a phone call originating from of any telephone type, conventional or cellular. The present invention shows a system 10 composed of a cellular phone 12 (figure merely illustrative), a source 13 of the cellular phone and of the activate/deactivate apparatus 14 elaborated according to the present invention. For user acquiring the system 10 in accordance with the invention is necessary to obtain a specific line of cellular phone, which user could choose, inclusive, in relation to the types actually available services in the market, such as a pre-paid system, a pos-paid system, a profile plane and others.

## Description

### Field of the Invention

This present invention relates generally to activate and deactivate other known systems, such as car brake system, electric and/or electronic system, fire alarm system, systems of safety and others, by a phone call originating from of any telephone type, conventional or cellular.

### Background of the Invention

Nowadays, there are apparatus for tracking and monitoring of vehicles by satellite. Such apparatus use software of known monitoring, that allows to locate and block cars, in case of robbery or steal, accurately, by global positioning system - GPS, with the help of monitoring centre, that operates during 24 hs. As we know, such apparatus are very expensive and they are enough complex. In addition, the service offered by monitoring centre is an expensive service and monthly maintenance rate is high.

These complex systems use a sophisticated computer, coupled to a cellular telephone of private line and with communication cryptographed, offering several services, such as location service, anti-vandalism service, electronic barrier and others, that burdening the services and makes the system much more complex.

The system and the apparatus claimed have a simple, efficient, low cost mechanism and in accordance with all known quality rules.

### Brief Description of the Drawings

The invention will now be described in more detail in conjunction with the accompanying drawings, wherein:
Figure 1 - shows a logical scheme of the activate/deactivate system according to the present invention;
Figure 2 - shows a flowchart to configure the system according to the present invention;
Figure 3 - shows a flowchart of deactivate mode of the activate/deactivate system according to the present invention;
Figure 4 - shows a flowchart of activate mode of the activate/deactivate system according to the present invention;
Figure 5 - shows a logical circuit of the activate/deactivate apparatus according to the present invention.

### Detailed Description of the Invention

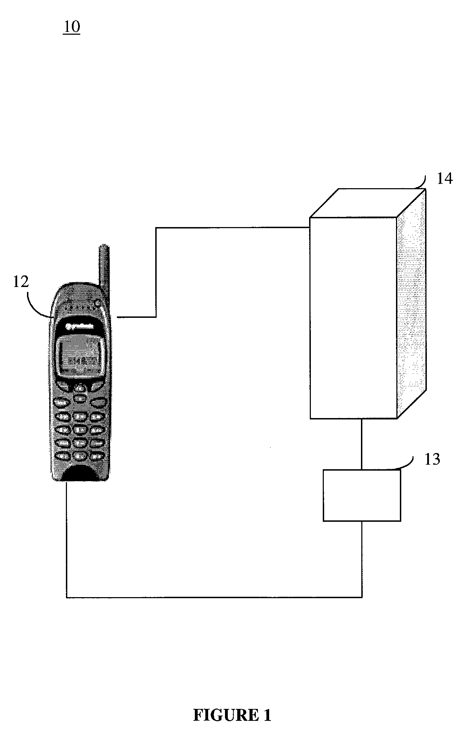

The Figure 1 shows the activation/deactivation system according to the present invention. As can be observed in Figure 1, the system 10 is composed of a cellular phone 12 (figure merely illustrative), a source 13 of the cellular apparatus and of the activate/deactivate apparatus 14 elaborated according to the present invention. The cellular apparatus 12 used in this system can be found at any telephony store, and it works with any operator type and system, such as TDMA, CDMA, AMPS, GSM or in others systems.

The present invention can be used in the cellular phones of first generation (analogical) as well as in second generation (digital). As we know, the current generation is digital and it uses packet radiocommunication. Today, there are two important systems at the market, one has retroactive compatibility with the scheme of frequency allocation AMPS and it is specified in the pattern IS-54 and the IS-135, and the other system is based on the direct sequence spread spectrum and it is specified in the pattern IS-95. As we know, IS-54 is dual mode (analogical and digital). The present invention, can also be used, in cellular phones of GSM type, which is based on circuit switching and in phones that use the digital service of packet switching called CDPD. As can be noted, the present invention apparatus incorporates all known technologies, being able to be coupled to any apparatus type. According to the present invention the coupling of the activate/deactivate apparatus to the cellular apparatus operated by anyone of the systems described above is done in simple and easy way by part of the user.

For user acquiring the system 10 in accordance with the invention is necessary to obtain a specific line of cellular phone, which user could choose, inclusive, in relation to the types actually available services in the market, such as a pre-paid system, a pos-paid system, a profile plane and others.

The system elaborated according to present invention has the advantage that is not necessary to use a monitoring centre, which makes the system simplest and less complex, in case of car blockade the tracking can be accomplished by the own operator.

Another advantage that can be noted is use a cellular phone of pre-paid system, becoming the economical system and of easy acquisition for people of little income.

The cellular phone 12 used in this system is a simple apparatus and of popular use, such as Samsung Slim, Motorola V120, Nokia 5120 or (3310 GSM), LG and etc.

The activate/deactivate apparatus 14 can be embedded inside of the own cellular phone or to be manufactured apart.

The bell of the cellular phone 12 is coupled to the integrate system A of the activate/deactivate apparatus 14 elaborated in accordance with the invention, the source 13 similar to the cellular phone charger used in the car is linked in source +12 Volts, the operating relay E, and the comparator are coupled in the same source +12 Volts.

The source +5 Volts of the flip-flop is created from the same source +12 Volts through a resistance and of a reference diode Zener.

The source +12 Volts can be in the case of the use of the system in a vehicle, the own battery 12 Volts of the vehicle.

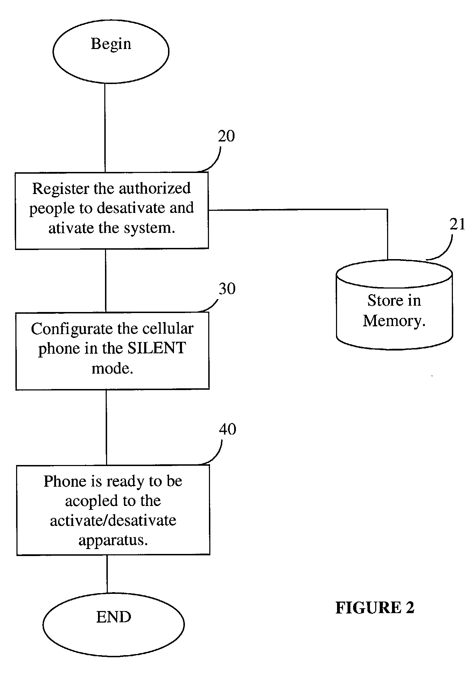

Now, regarding to the Figure 2, it shows a flowchart that describes a form to configure the activate/deactivate system elaborated according to the present invention. In the step 20, the user should register in the cellular phone 12, the numbers of the telephones of the authorized people's list to effectuate a call for the cellular phone 12, for these people can deactivate/activate the activate/deactivate system 10. These telephones 21 are stored in the memory of the cellular phone 12. The constant telephones of the authorized people's list can be conventional or mobiles phones and any phone company, these numbers will be recognized by own BINA of the cellular phone 12. In the step 30, the user should configure the cellular phone 12 in the SILENT mode, in other words, without the touch of the bell, for the case of a phone call accomplished by strangers non constant of the list of telephones previously stored. In the step 40, the cellular phone 12 is ready to be coupled to the activate/deactivate apparatus 14.

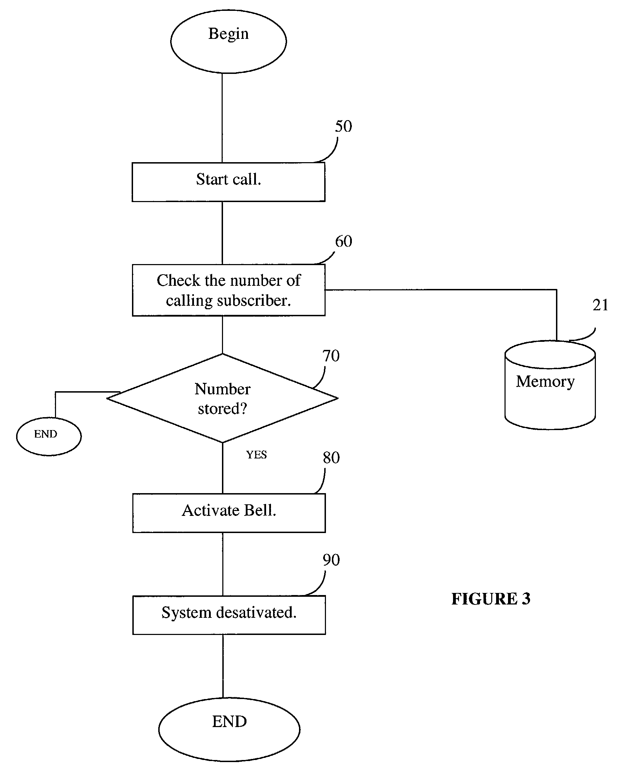

Making mention to the Figure 3, it shows a flowchart to deactivate the activate/deactivate system according to the present invention. When making a phone call 50, being a conventional or mobile apparatus, the cellular phone 12 verifies 60 the number of calling subscriber, in the step 70 the dialed number is verified if it belongs to the list previously stored, if yes the phone 12 activate 80 the bell of the cellular phone 12, that automatically deactivate 90 the of activate/deactivate apparatus 14, otherwise if the user is not registered, nothing occur, in other words, the system is not deactivated and it continues in operation.

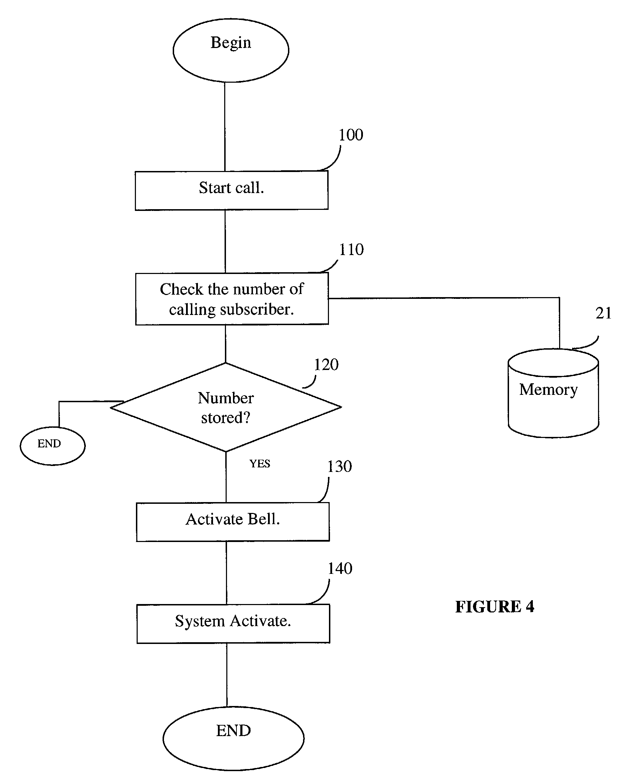

Referring to the Figure 4, it shows a flowchart to activate the activate/deactivate according to the present invention. When making a phone call 100, being a conventional or mobile apparatus, the cellular phone 12 verifies 110 the number of calling subscriber, in the step 110 the dialed number is verified if it belongs to the list previously stored, if the number was stored 120, the phone 12 activates 130 the bell of the cellular phone 12, that automatically arms 140 the activate/deactivate apparatus 14, otherwise if the user is not stored 120 nothing occur, in this case, the system is not activated and it continues out of use.

In order to use the activate/deactivate system 10 in the electric net, it is necessary, to couple a relay in the output of the of activate/deactivate apparatus 14. The relay is opened, when in the step 80 the bell of the cellular phone is activated by a person authorized, accomplishing then the turning off and turning on of the residence light.

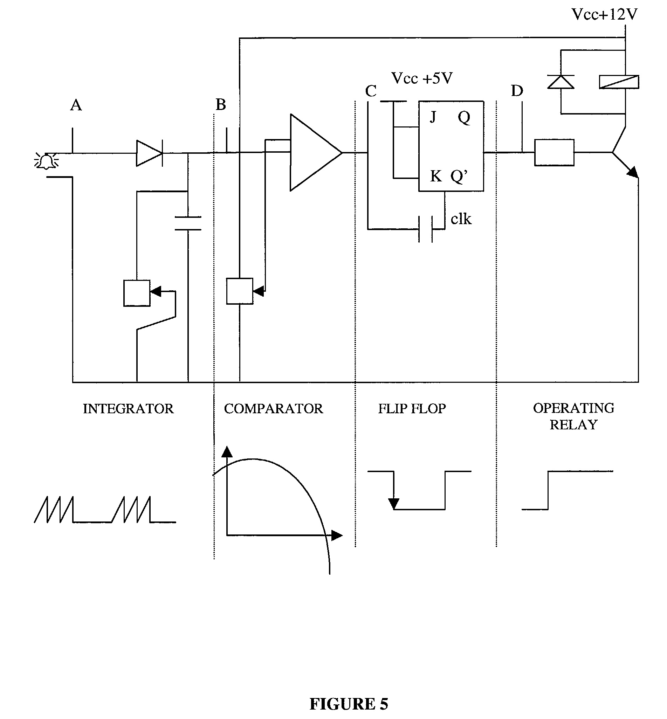

Referring now to the Figure 5, it shows a logical circuit of the activate/deactivate apparatus according to the present invention. The logical circuit is composed basically of a current integrator A, a comparator B, a flip-flop C, and of a circuit commanded by relay. Still in the Figure 5, several graphs can be observed in each stage of the logical circuit.

While the invention was described here with regard to the best incorporation mode, it is not intended to limit the extension of the invention to the private form, alternatives, modifications, and equivalents can be done within of the inventive concept and scope of the present invention as defined by appended claims.

## Claims

1. Apparatus (14) to activate and deactivate other systems,
**characterized in that** it comprises:
current integrator (A), which is connected in its input to the bell of the cellular phone (12);
current integrator (A) is linked to a comparator (B) and this to a flip-flop (C);
flip-flop is connected a relay circuit (D) to be connected in the source (13) of the cellular phone (12).

2. Apparatus (14) according to claim 1, **characterized in that** it can be embedded in the own cellular phone or it can be manufactured apart.

3. Method to insert the necessary information in the cellular phone so that this can be coupled to the activate/deactivate apparatus, the method is **characterized in that** it comprises the steps of:
register (20) the authorized people to activate and deactivate the system;
store (21) the authorized people in the memory of the cellular;
configure (30) the cellular phone in the silent mode, for the numbers of telephone non constant of the list;
couple (40) the cellular to the activate/deactivate apparatus.

4. Method to deactivate the activate/deactivate apparatus used in other systems, **characterized in that** it comprises the steps of:
effectuate a phone call (50) for the cellular phone coupled to the activate/deactivate apparatus;
verify (60) the number of calling subscriber;
search for (21) the number in the memory of the cellular;
compare (70) the number of calling subscriber with the number of the list previously stored;
deactivate (90) the bell of the cellular if the number of calling subscriber is on the list previously stored.

5. Method according to claim 4, **characterized in that** if the number of the calling subscriber in the comparing step is not stored, nothing occur, and the system (10) continues activated.

6. Method to activate the activate/deactivate apparatus used in other systems, **characterized in that** it comprises the steps of:
effectuate a phone call (100) for the cellular phone coupled to the activate/deactivate apparatus;
verify (110) the number of the calling subscriber;
search for (21) the number in the memory of the cellular;
compare (120) the number of the calling subscriber with the number of the list previously stored;
activate (130) the bell of the cellular if the number of calling subscriber is on the list previously stored.

7. Method according to claim 6, **characterized in that** if the number of the calling subscriber in the comparing step is not stored, nothing occur, and the system (10) continues deactivated.

8. System to activate and deactivate the activate/deactivate apparatus used in other systems, is constituted of a cellular phone (12), a source (13) of the cellular (12), the system is **characterized in that** the source (13) is coupled to the relay circuit (D) and that the bell of the cellular (12) is linked in the inputs of the integrator.
